# EUROPÄISCHE PATENTSCHRIFT

(11) **EP 3 485 247 B1**
(45) Veröffentlichungstag und Bekanntmachung des Hinweises auf die Patenterteilung: **13.03.2024**
(21) Anmeldenummer: 17739571.2
(22) Anmeldetag: 13.07.2017
(51) Int. Cl.: H01S 3/02, H01S 3/086, H01S 3/094

(54) **OPTISCHE ANORDNUNG ZUR KOMPENSATION VON FEHLAUSRICHTUNGEN EINES REFLEKTORS GEGENÜBER EINER LICHTQUELLE**
OPTICAL ARRANGEMENT FOR COMPENSATING MISALIGNMENTS OF A REFLECTOR IN RELATION TO A LIGHT SOURCE
SYSTÈME OPTIQUE DE COMPENSATION DE DÉFAUTS D'ALIGNEMENT D'UN RÉFLECTEUR PAR RAPPORT À UNE SOURCE DE LUMIÈRE

(30) Priorität: 15.07.2016 DE 102016113049
(43) Veröffentlichungstag der Anmeldung: 22.05.2019
(73) Patentinhaber: Mettler-Toledo GmbH, 8606 Greifensee (CH)
(72) Erfinder: KILLICH, Frank, 37085 Göttingen (DE)
(74) Vertreter: Mettler-Toledo
(86) Internationale Anmeldenummer: PCT/EP2017/067722
(87) Internationale Veröffentlichungsnummer: WO 2018/011350

(56) Entgegenhaltungen:
- WO-A1-98/57400
- US-A- 4 544 272
- US-A- 5 251 221
- US-B1- 9 212 990

## Beschreibung

### TECHNISCHES GEBIET DER ERFINDUNG

Die Erfindung bezieht sich auf eine optische Anordnung mit einer Lichtquelle, die einen Lichtstrahl in Richtung einer optischen Achse emittiert, wobei die optische Achse gegenüber einer mechanischen Struktur der Lichtquelle definiert ist, mit einem entfernt von der Lichtquelle angeordneten ersten Reflektor für den Lichtstrahl und mit einem zweiten Reflektor für den von dem ersten Reflektor reflektierten Lichtstrahl.

Die optische Anordnung kann Teil eines LASER-Resonators sein. Sie kann auch einen Teil eines LASER-Interferometers oder eines LASER-Spektrometers ausbilden.

### STAND DER TECHNIK

Wenn ein LASER-Resonator zum Erreichen einer gewünschten Strahlqualität mit einer großen optischen Länge zwischen den LASER-Resonator begrenzenden Reflektoren ausgebildet wird, besteht eine Herausforderung darin, die Reflektoren in ihrer Ausrichtung so zu stabilisieren, dass der von ihnen reflektierte LASER-Strahl auf sich selbst reflektiert wird. Vielfach fehlen steife mechanische Strukturen, an denen die entfernt von einer LASER-Material umfassenden Lichtquelle angeordneten Reflektoren mit ausreichender Steifigkeit ihrer Lage und Orientierung befestigt werden könnten. Ein ähnliches Problem tritt bei LASER-Interferometern auf, das sich noch vervielfacht, wenn ein Reflektor, der den LASER-Strahl auf sich selbst reflektieren soll, in Richtung des LASER-Strahls beweglich ist und entsprechend nicht starr an einer mechanischen Struktur befestigt werden kann. Auch LASER-Spektrometer, bei denen ein Reflektor auf einer Seite einer Messtrecke angeordnet ist, sind auf eine stabile Ausrichtung des Reflektors angewiesen, damit der reflektierte LASER-Strahl eine gewünschte Richtung beispielsweise zu einem Detektor einhält.

Retroreflektoren reflektieren einfallendes Licht grundsätzlich zu der jeweiligen Lichtquelle zurück. Wenn ein Trippelprisma als Retroreflektor einen einfallenden LASER-Strahl reflektiert, ist der reflektierte LASER-Strahl jedoch gegenüber dem einfallenden LASER-Strahl parallelversetzt. Dabei hängt die Größe des Parallelversatzes von einem Querversatz zwischen einer Hauptachse des Trippelprismas zu der optischen Achse des einfallenden LASER-Lichts und einem Winkel zwischen der Hauptachse des Trippelprismas und der optischen Achse des einfallenden LASER-Strahls ab. Bei einem als Retroreflektor verwendeten Katzenauge kommt ein zusätzlicher Winkelfehler zwischen dem einfallenden LASER-Strahl und dem reflektierten LASER-Strahl hinzu, wenn die Hauptachse des Katzenauges gegenüber der optischen Achse des einfallenden LASER-Strahls verkippt ist.

Aus Zhiguang Xu et al.: Adjustment-free cat's eye cavity He-Ne laser and its outstanding stability, Optics Express, Vol. 13, No. 14, 11. Juli 2005, Seiten 5565-5573 ist die Verwendung eines Katzenauges als ein Reflektor bekannt, der eine LASER-Kavität einseitig begrenzt.

Aus der EP 2 604 999 A1 ist ein Gasmessgerät zur absorptions-spektroskopischen in-situ Bestimmung mindestens eines chemischen und/oder physikalischen Parameters eines gasförmigen Messmediums bekannt. Das Gasmessgerät weist einen LASER als Strahlungsquelle, ein Prozessfenster zur Einkopplung der vom LASER ausgesandten Strahlung in ein Messmedium und mindestens einen Detektor auf, mit welchem die Strahlung nach Wechselwirkung mit dem Messmedium detektiert wird. Das Prozessfenster ist als Meniskuslinse ausgebildet, welche eine konvexe Oberfläche und eine konkave Oberfläche aufweist. Ferner ist ein Retroreflektor vorgesehen, welcher die in das Messmedium eingekoppelte Strahlung zu dem Prozessfenster zurücklenkt. Der Retroreflektor ist als Katzenauge, Trippelprisma, Trippelspiegel oder planarer Spiegel ausgebildet. Der Detektor und der LASER können gemeinsam auf der einen Seite des Prozessfensters angeordnet sein, wobei der Retroreflektor auf der anderen Seite des Prozessfensters hinter dem Messmedium angeordnet ist. Für den Detektor kann auch ein zweites Prozessfenster mit einer zweiten Meniskuslinse vorgesehen sein. Der Retroreflektor ist dichtungsfrei angeordnet und wird von dem Messmedium oder einem Spülgas umspült.

Lage- oder Richtungsänderungen des Retroreflektors wirken sich auf die Lage des zu dem Detektor zurückreflektierten Strahls in Bezug auf die Lage des von dem LASER ausgesandten Strahls aus.

Aus der US 4 383 762 A ist ein Zweistrahlinterferometer für die Fourier Spektroskopie mit einem starren Pendel bekannt. An dem starren Pendel ist ein beweglicher Retroreflektor in Form eines Winkelspiegels gelagert. Durch das starre Pendel ist die Beweglichkeit des Retroreflektors auf eine Ebene beschränkt. Ein längs einer ersten optischen Achse einfallender Lichtstrahl wird von dem Retroreflektor in Richtung einer zweiten optischen Achse reflektiert, die in der Ebene zu der ersten optischen Achse parallel versetzt ist. Auf der zweiten optischen Achse ist ein orthogonal ausgerichteter Planspiegel angeordnet, der den Lichtstrahl auf der zweiten optischen Achse zu dem Retroreflektor an dem Pendel zurück wirft. Dieser reflektiert den Lichtstrahl dann ein zweites Mal und zwar entgegen dessen ursprünglichen Einfallsrichtung wieder auf der ersten optischen Achse.

Weitere Beispiele des Stands der Technik werden in den Dokumenten WO9857400, US4544272, US9212990 B1, US5251221 und CN105406338 beschrieben.

### AUFGABE DER ERFINDUNG

Der Erfindung liegt die Aufgabe zugrunde, eine optische Anordnung aufzuzeigen, bei der die Lage und vorzugsweise auch die Orientierung eines entfernt von der Lichtquelle angeordneten, einen von der Lichtquelle ausgehenden Lichtstrahl reflektierenden Reflektors keinen Einfluss auf die Lage der optischen Achse eines von der optischen Anordnung ausgegebenen Lichtstrahls hat.

### LÖSUNG

Die Aufgabe der Erfindung wird durch eine optische Anordnung mit den Merkmalen des unabhängigen Patentanspruchs 1 gelöst. Die abhängigen Patentansprüche 2 bis 12 betreffen bevorzugte Ausführungsformen der erfindungsgemäßen optischen Anordnung. Die Patentansprüche 13 bis 15 sind auf Anwendungen der erfindungsgemäßen optischen Anordnung in einem LASER-Resonator, einem LASER-Interferometer und einem LASER-Spektrometer gerichtet.

### BESCHREIBUNG DER ERFINDUNG

Bei einer erfindungsgemäßen optischen Anordnung mit einer Lichtquelle, die einen Lichtstrahl in Richtung einer optischen Achse emittiert, wobei eine Lage der optischen Achse gegenüber einer mechanischen Struktur der Lichtquelle definiert ist, mit einem entfernt von der Lichtquelle angeordneten ersten Reflektor und mit einem zweiten Reflektor für den von dem ersten Reflektor reflektierten Lichtstrahl ist der erste Reflektor ein Retroreflektor, der mit einem Querversatz zu der optischen Achse angeordnet ist, so dass er den von der Lichtquelle kommenden Lichtstrahl in Richtung einer zweiten optischen Achse reflektiert, die zu der ersten optischen Achse in Querrichtung des Querversatzes um ein doppeltes Maß des Querversatzes parallelversetzt ist. Der zweite Reflektor ist an der mechanischen Struktur der Lichtquelle befestigt und reflektiert den von dem ersten Reflektor reflektierten Lichtstrahl in Richtung einer dritten optischen Achse zu dem ersten Reflektor zurück, wobei die dritte optische Achse um ein festes Maß in einer festen Querrichtung zu der zweiten optischen Achse parallel versetzt ist. Dadurch wird der Lichtstrahl von dem ersten Reflektor in Richtung einer vierten optischen Achse reflektiert, die um das feste Maß entgegen der festen Querrichtung gegenüber der ersten optischen Achse parallelversetzt ist.

Bei der Erfindung ist der erste Reflektor ein zu der ersten optischen Achse des von der Lichtquelle emittierten Lichtstrahls querversetzter Retroreflektor. Dass der Retroreflektor den Lichtstrahl nicht auf sich selbst, sondern mit einem Parallelversatz zwischen der zweiten optischen Achse des reflektierten Lichtstrahls zu der ersten optischen Achse des von der Lichtquelle emittierten Lichtstrahls reflektiert, wird dabei nicht nur hingenommen, sondern gezielt ausgenutzt, um den Lichtstrahl zu dem an der mechanischen Struktur der Lichtquelle befestigten zweiten Reflektor zu reflektieren, dessen Ausrichtung so gegenüber der ersten optischen Achse definiert ist.

Der zweite Reflektor ist so ausgebildet, dass er den von dem ersten Reflektor reflektierten Lichtstrahl in Richtung der um das feste Maß in der festen Querrichtung zu der zweiten optischen Achse parallelversetzten dritten optischen Achse zu dem ersten Reflektor zurück reflektiert. Dies ist eine bekannte Eigenschaft bestimmter Reflektoren, die dazu definiert gegenüber der ersten optischen Achse auszurichten sind, so dass sie diese Ausrichtung auch gegenüber der zweiten optischen Achse aufweisen. Bei der Erfindung wird der von dem zweiten Reflektor zu dem Retroreflektor zurück reflektierte Lichtstrahl von dem Retroreflektor nicht in Richtung der ersten optischen Achse zu der Lichtquelle hin reflektiert, sondern in Richtung der vierten Achse, die um das feste Maß entgegen der festen Querrichtung gegenüber der ersten optischen Achse parallelversetzt ist, wobei das feste Maß und die Querrichtung durch den zweiten Reflektor und dessen Befestigung an der mechanischen Struktur der Lichtquelle vorgegeben sind. Damit ist die Lage der vierten optischen Achse gegenüber der ersten optischen Achse vollständig durch den zweiten Reflektor und dessen Befestigung an der mechanischen Struktur der Lichtquelle vorgegeben.

Die Richtung, in der der Retroreflektor den von dem zweiten Reflektor reflektierten Lichtstrahl reflektiert, ist unabhängig davon, wie groß der Abstand des Retroreflektors von der Lichtquelle und wie groß der Querversatz des Retroreflektors gegenüber der ersten optischen Achse ist. Dies gilt selbst dann, wenn der Retroreflektor ein Katzenauge ist.

Bei der praktischen Umsetzung der vorliegenden Erfindung tritt der theoretische und zu vermeidende Fall nicht auf, dass das feste Maß und die feste Querrichtung des durch den zweiten Reflektor eingeführten Parallelversatzes zwischen der zweiten und der dritten optischen Achse den durch den Retroreflektor eingeführten Parallelversatz zwischen der ersten und der zweiten optischen Achse gerade kompensieren, was zur Folge hätte, dass die erste und die dritte optische Achse zusammenfallen. Um die notwendige Größe, d. h. die wirksame Querschnittsfläche des Retroreflektors zu begrenzen, ist jedoch bevorzugt, wenn das feste Maß und die feste Querrichtung des durch den zweiten Reflektor eingeführten Parallelversatzes zwischen der zweiten und der dritten optischen Achse den durch den Retroreflektor eingeführten Parallelversatzes zwischen der ersten und der zweiten optischen Achse teilweise kompensieren. Ein Winkel zwischen dem Querversatz des Retroreflektors zu der ersten optischen Achse und dem von dem zweiten Reflektor resultierenden Parallelversatz der vierten optischen Achse gegenüber der ersten optischen Achse beträgt zwischen 10° und 70° oder zwischen 20° und 50°. Zudem kann das feste Maß des Parallelversatzes das 1- bis 3-fache oder das 1,5- bis 2,5-fache, d. h. etwa das 2-fache des Querversatzes des Retroreflektors multipliziert mit dem Cosinus dieses Winkels betragen. Es versteht sich, dass sich diese Angaben insbesondere auf eine Grundausrichtung des Retroreflektors gegenüber der ersten optischen Achse beziehen. Diese Angaben können aber auch in dem gesamten Bereich von zu erwartenden Lageänderungen des Retroreflektors gegenüber der ersten optischen Achse eingehalten werden.

Der zweite Reflektor kann eine Spiegelanordnung oder eine Prismenanordnung mit drei den Lichtstrahl reflektierenden planen Flächen sein, an denen der Lichtstrahl nacheinander reflektiert wird. Dabei kann eine der planen Flächen orthogonal zu der ersten optischen Achse ausgerichtet sein, während die beiden anderen planen Flächen achsensymmetrisch zu einer Flächennormalen der einen planen Fläche angeordnet sind und wobei die Flächennormalen aller drei planen Flächen in eine Ebene fallen. In diesem Fall trifft der Lichtstrahl zunächst auf eine der beiden anderen planen Flächen, dann auf die eine der planen Flächen und als letztes auf die andere der beiden anderen planen Flächen und wird daran reflektiert. In einer anderen Ausführungsvariante der vorliegenden Erfindung verläuft eine der drei den Lichtstrahl reflektierenden planen Flächen unter einem Winkel von 45° zu der ersten optischen Achse, so dass sie den Lichtstrahl um 90° ablenkt, und die beiden anderen planen Flächen lenken den Lichtstrahl durch zwei aufeinanderfolgende Reflektionen um weitere 90° ab.

Auf der vierten optischen Achse kann ein dritter Reflektor angeordnet sein, der den von dem Retroreflektor in Richtung der vierten optischen Achse reflektierten Lichtstrahl zurück reflektiert und der an der mechanischen Struktur der Lichtquelle befestigt ist. Dieser dritte Reflektor kann den Lichtstrahl insbesondere in Richtung der vierten optischen Achse zurück zu dem Retroreflektor reflektieren, und dazu ein orthogonal zu der ersten optischen Achse ausgerichteter Planspiegel sein. Der Lichtstrahl läuft dann über den Retroreflektor zurück zu dem zweiten Reflektor, von dort zurück zu dem Retroreflektor und schließlich auf der ersten optischen Achse zurück zu der Lichtquelle. Auf diese Weise kann ein gefalteter LASER-Resonator ausgebildet sein, wobei die Lichtquelle gepumptes LASER-Material umfasst. Der dritte Reflektor kann ebenso wie der zweite Reflektor an der mechanischen Struktur der Lichtquelle befestigt sein. Weil er in der Regel ebenso wie der zweite Reflektor nicht von der Lichtquelle entfernt angeordnet ist, ist diese Befestigung unproblematisch.

Statt als Planspiegel kann der dritte Reflektor auch als Konvexspiegel ausgebildet sein, der um einen Mittelpunkt auf der vierten Achse gekrümmt ist. Ein solcher Konvexspiegel ist als Abschluss eines LASER-Resonators nicht unüblich, um eine Strahldivergenz des Lichtstrahls, d. h. des LASER-Strahls in dem LASER-Resonator, zu begrenzen.

Der dritte Reflektor kann auch so wie der zweite Reflektor ausgebildet sein, d. h. den Lichtstrahl in Richtung einer fünften optischen Achse zu dem ersten Reflektor zurück reflektieren, wobei die fünfte optische Achse um ein weiteres festes Maß in einer weiteren festen Querrichtung zu der vierten optischen Achse parallel versetzt ist. Dadurch wird der Lichtstrahl von dem ersten Reflektor in Richtung einer sechsten optischen Achse reflektiert, die zusätzlich zu dem festen Maß entgegen der festen Querrichtung auch um das weitere feste Maß entgegen der weiteren festen Querrichtung gegenüber der ersten optischen Achse parallelversetzt ist

Der erste Reflektor der erfindungsgemäßen optischen Anordnung, d. h. der Retroreflektor, kann insbesondere ein Trippelprisma oder ein Trippelspiegel sein oder zumindest aufweisen. Ein solches Trippelprisma oder eine solcher Trippelspiegel als Retroreflektor kann auch mit seiner Hauptachse gegenüber der ersten optischen Achse verkippt werden, ohne dass dadurch eine Lageveränderung des zum zweiten Mal von dem Retroreflektor reflektierten Lichtstrahls gegenüber der ersten optischen Achse auftritt. Die optische Achse, in deren Richtung der Retroreflektor den Lichtstahl von der Lichtquelle zum zweiten Mal reflektiert, ist dann insgesamt von der Lage und Orientierung des Retroreflektors entkoppelt.

In einer zu der bis hierher beschriebenen Ausführungsform der erfindungsgemäßen optischen Anordnung in Bezug auf das erneute Reflektieren des von dem zweiten Reflektor reflektierten LASER-Strahls alternativen Ausführungsform der erfindungsgemäßen optischen Anordnung erfolgt dieses erneute Reflektieren nicht durch den ersten Reflektor, sondern einen damit starr gekoppelten weiteren Retroreflektor. Die starre Relativanordnung des ersten Reflektors und des weiteren Retroreflektors ist dabei insbesondere so, dass die beiden Retroreflektoren einen festen Abstand quer zu der dritten optischen Achse aufweisen und dass der feste Abstand unter einem festen Winkel oder parallel zu der ersten Querrichtung zwischen der zweiten und der dritten optischen Achse verläuft. Bei Trippelprismen als Retroreflektoren ist der relevante festzuhaltende Abstand die Komponente des Abstands der Spitzen der Trippelprismen, die senkrecht zu der dritten optischen Achse verläuft.

Auch wenn die Hauptachsen der beiden Retroreflektoren nicht parallel zueinander verlaufen, wird der Lichtstrahl bei der alternativen Ausführungsform der erfindungsgemäßen optischen Vorrichtung von dem mit dem ersten Reflektor gekoppelten Retroreflektor in Richtung einer vierten optischen Achse reflektiert, die um ein weiteres festes Maß in der festen Querrichtung gegenüber der ersten optischen Achse parallel versetzt ist. Das weitere feste Maß ist außer von dem festen Maß des Parallelversatzes zwischen der zweiten und der dritten optischen Achse von dem festen Abstand des ersten Reflektors und des damit starr gekoppelten zweiten Reflektors sowie von dem etwaigen festen Winkel zwischen dem festen Abstand und der festen Querrichtung abhängig. Insbesondere kommt es auf eine Differenz zwischen dem festen Abstand der Retroreflektoren ggf. multipliziert mit dem Kosinus eines etwaigen Winkels zwischen dem festen Abstand und der festen Querrichtung und dem festen Maß des Querversatzes zwischen der zweiten und der dritten optischen Achse an. Ohne einen solchen Unterschied und ohne Winkel zwischen dem festen Abstand und der festen Querrichtung sind das feste Maß und das weitere feste Maß gleich und die beiden Querversätze verlaufen in derselben Richtung. Mit kleiner werdendem festem Abstand nimmt das weitere feste Maß ab, und zwar um die doppelte Differenz zu dem festen Maß. Ebenso steigt das weitere feste Maß mit größer werdendem festem Abstand an.

Auch bei dieser alternativen Ausführungsform der erfindungsgemäßen Anordnung führt der zweite Reflektor den Querversatz um das feste Maß ungleich null ein, ist also kein Planspiegel. Der erste Retroreflektor und der zweite Retroreflektor sind vorzugsweise beide Trippelprismen oder Trippelspiegel. Sinnvollerweise sind sie gleich groß. Sie können identisch ausgebildet sein. Alle weiteren Merkmale der zuerst beschriebenen Ausführungsform der Erfindung, insbesondere die Ausgestaltung des zweiten Retroreflektors, können auch bei dieser alternativen Ausführungsform der erfindungsgemäßen optischen Anordnung realisiert werden.

Wie bereits angedeutet wurde, kann die Lichtquelle ein gepumptes LASER-Material aufweisen, und der Lichtstrahl kann entsprechend ein LASER-Strahl sein. Insbesondere kann die erfindungsgemäße optische Anordnung Teil eines LASER-S mit einem LASER-Resonator sein, wobei der erste Reflektor und der zweite Reflektor sowie ggf. der mit dem ersten Reflektor gekoppelte Retroreflektor Teile des LASER-Resonators sind und das LASER-Material der Lichtquelle in dem LASER-Resonator angeordnet ist.

Weiterhin kann die erfindungsgemäße optische Anordnung Teil eines LASER-Interferometers sein, wobei der von dem ersten Reflektor und dem zweiten Reflektor sowie ggf. dem mit dem ersten Reflektor gekoppelten Retroreflektor reflektierte Lichtstrahl mit einem dazu kohärenten Lichtstrahl überlagert wird, in dessen optischen Pfad ausschließlich optische Elemente angeordnet sind, die an der mechanischen Struktur der Lichtquelle befestigt sind.

Darüber hinaus kann die erfindungsgemäße optische Anordnung Teil eines LASER-Spektrometers sein, wobei die Lichtquelle, der zweite Reflektor und ein an der mechanischen Struktur der Lichtquelle befestigter Detektor auf einer ersten Seite und der erste Reflektor sowie ggf. der mit dem ersten Reflektor gekoppelte Retroreflektor auf einer der ersten Seite gegenüberliegenden zweiten Seite eines Messvolumens angeordnet sind, so dass der von dem ersten Reflektor und dem zweiten Reflektor sowie ggf. dem mit dem ersten Reflektor gekoppelten Retroreflektor reflektierte Lichtstrahl mindestens viermal durch das Messvolumen hindurchtritt bevor er auf den Detektor trifft.

Von dem aus der EP 2 604 999 A1 bekannten Gasmessgerät mit einer optischen Anordnung und einem Detektor,
- wobei die optische Anordnung
   - eine Lichtquelle, die ein LASER-Material aufweist und einen Lichtstrahl in Richtung einer ersten optischen Achse emittiert, wobei der Lichtstrahl ein LASER-Strahl ist und wobei eine Lage der ersten optischen Achse gegenüber einer mechanischen Struktur der Lichtquelle definiert ist, und
   einen entfernt von der Lichtquelle angeordneten ersten Reflektor für den Lichtstrahl umfasst,
- wobei der erste Reflektor ein Retroreflektor ist, der mit einem Querversatz zu der ersten optischen Achse angeordnet ist, so dass er den Lichtstrahl in Richtung einer zweiten optischen Achse reflektiert, die zu der ersten optischen Achse in Querrichtung des Querversatzes parallelversetzt ist,

wobei der Detektor an der mechanischen Struktur der Lichtquelle befestigt ist und
wobei die Lichtquelle und der Detektor auf einer ersten Seite eines Messvolumens angeordnet sind und der erste Reflektor auf einer der ersten Seite gegenüberliegenden zweiten Seite des Messvolumens angeordnet ist, so dass der von dem ersten Reflektor reflektierte Lichtstrahl durch das Messvolumen hindurchtritt, bevor er auf den Detektor trifft, unterscheidet sich ein LASER-Spektrometer insbesondere dadurch
dass ein zweiter Reflektor der optische Anordnung an der mechanischen Struktur der Lichtquelle befestigt ist und den von dem ersten Reflektor reflektierten Lichtstrahl in Richtung einer dritten optischen Achse, die gegenüber der zweiten optischen Achse um ein festes Maß in einer festen Querrichtung parallelversetzt ist,
- entweder zu dem ersten Reflektor zurück reflektiert, so dass der Lichtstrahl von dem ersten Reflektor erneut und diesmal in Richtung einer vierten optischen Achse reflektiert wird, die um das feste Maß entgegen der festen Querrichtung gegenüber der ersten optischen Achse parallelversetzt ist,
- oder zu einem weiteren Retroreflektor reflektiert, der mit dem ersten Reflektor starr gekoppelt und derart ausgerichtet ist, dass der Lichtstrahl von dem weiteren Retroreflektor in Richtung einer vierten optischen Achse reflektiert wird, die um ein weiteres festes Maß in der festen Querrichtung gegenüber der ersten optischen Achse parallelversetzt ist,
so dass der von dem ersten Reflektor und dem zweiten Reflektor reflektierte Lichtstrahl mindestens viermal durch das Messvolumen hindurchtritt, bevor er auf den Detektor trifft.

In allen oben genannten Anwendungen der erfindungsgemäßen optischen Anordnung erweist sich die Lagestabilität der optischen Achse, in deren Richtung der Retroreflektor den Lichtstrahl beim zweiten Mal reflektiert, gegenüber jeglichen Lage- und Orientierungsänderungen des Retroreflektors als großer Vorteil.

Die erfindungsgemäße optische Anordnung kann auch Teil einer Abstandsmessvorrichtung sein, wobei die Lichtquelle, der zweite Reflektor und ein an der mechanischen Struktur der Lichtquelle befestigter Detektor an einem Ende des zu messenden Abstands und der erste Reflektor an dem anderen Ende des zu messenden Abstands angeordnet sind, so dass der von dem ersten Reflektor und dem zweiten Reflektor reflektierte Lichtstrahl mindestens viermal den Abstand zurücklegt, bevor er auf den Detektor trifft. So wird die Lauflänge des Lichtstrahls gegenüber einer einfachen Reflektion des Lichtstrahls an dem ersten Reflektor verdoppelt, was ihre praktische Messung vereinfacht, und der Lichtstrahl trifft sicher auf den Detektor, auch bei Lage- und Orientierungsänderungen des ersten Reflektors.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Prisma die Rede ist, ist dies so zu verstehen, dass genau ein Prisma, zwei Prismen oder mehr Prismen vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine erste Seitenansicht einer Ausführungsform der erfindungsgemäßen optischen Anordnung.
- **Fig. 2**: ist eine zweite Seitenansicht der optischen Anordnung in der Ausführungsform gemäß Fig. 1 in einer zu der Blickrichtung von Fig. 1 senkrechten Blickrichtung.
- **Fig. 3**: ist eine Ansicht der Ausführungsform der optischen Anordnung gemäß den Fig. 1 und 2 mit zu den Blickrichtungen der Fig. 1 und 2 senkrechter axialer Blickrichtung.
- **Fig. 4**: zeigt einen zweiten Reflektor der optischen Anordnung gemäß den Fig. 1 bis 3 in einer ersten Ausführungsform.
- **Fig. 5**: zeigt den zweiten Reflektor in einer zweiten Ausführungsform, die mit der Ausführungsform gemäß Fig. 4 gleichwirkend ist.
- **Fig. 6**: zeigt den zweiten Reflektor in einer dritten Ausführungsform.
- **Fig. 7**: zeigt den zweiten Reflektor in einer vierten Ausführungsform, die mit derjenigen gemäß Fig. 6 gleichwirkend ist.
- **Fig. 8**: zeigt den zweiten Reflektor in einer fünften Ausführungsform.
- **Fig. 9**: zeigt den zweiten Reflektor in der fünften Ausführungsform nach Verdrehung gegenüber Fig. 8.
- **Fig. 10**: zeigt den zweiten Reflektor in einer sechsten Ausführungsform, die mit der Ausführungsform gemäß Fig. 8 und 9 gleichwirkend ist.
- **Fig. 11**: illustriert den Effekt einer Verlagerung eines ersten, als Retroreflektor ausgebildeten Reflektors der erfindungsgemäßen optischen Anordnung in gemäß Fig. 3 vertikaler Richtung.
- **Fig. 12**: illustriert den Effekt einer Verlagerung des Retroreflektors in gemäß Fig. 3 horizontaler Richtung.
- **Fig. 13**: illustriert den Effekt einer Drehung des Retroreflektors um seine Hauptachse.
- **Fig. 14**: illustriert den Effekt einer Verkippung der Hauptachse des Retroreflektors.
- **Fig. 15**: ist eine Ansicht eines erfindungsgemäßen LASER-Interferometers.
- **Fig. 16**: ist eine Ansicht eines erfindungsgemäßen LASER-Spektrometers.
- **Fig. 17**: ist eine Seitenansicht einer alternativen Ausführungsform der erfindungsgemäßen optischen Anordnung.

### FIGURENBESCHREIBUNG

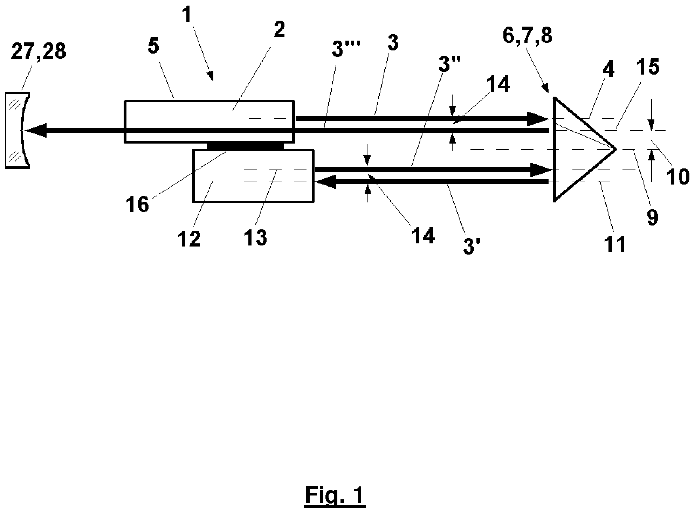

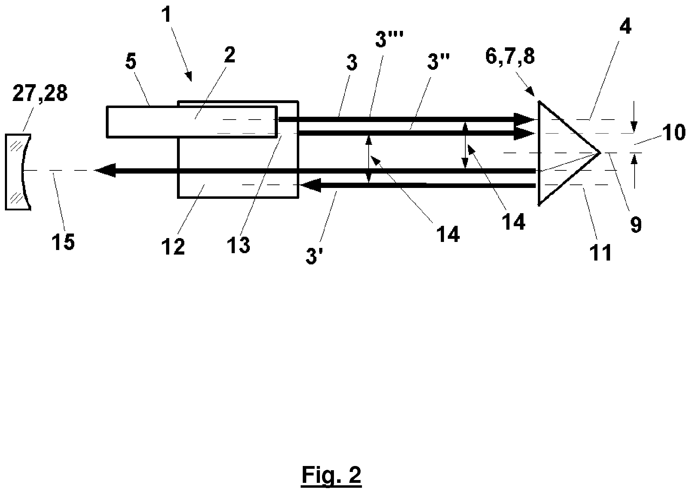

Die in den **Fig. 1 bis 3** dargestellte optische Anordnung 1 umfasst eine Lichtquelle 2, die einen Lichtstrahl 3 in Richtung einer ersten optischen Achse 4 emittiert. Dabei ist eine Lage der ersten optischen Achse 4 gegenüber einer mechanischen Struktur 5 der Lichtquelle 2 fest. Weiter umfasst die optische Anordnung 1 einen ersten Reflektor 6 in Form eines Retroreflektors 7. Der Retroreflektor 7 ist hier konkret als Trippelprisma 8 ausgebildet. Der Retroreflektor 7 ist bezüglich seiner Hauptachse 9 um ein Maß 10 quer zu der ersten optischen Achse 4 versetzt angeordnet. Der Retroreflektor 7 reflektiert den Lichtstrahl 3' in Richtung einer zweiten optischen Achse 11, die zu der ersten optischen Achse 4 in Querrichtung um das doppelte Maß 10 parallelversetzt ist. Der von dem Retroreflektor 7 reflektierte Lichtstrahl ist in den Figuren mit dem Bezugszeichen 3' versehen. Der reflektierte Lichtstrahl 3' trifft auf einen zweiten Reflektor 12 der optischen Anordnung 1. Der zweite Reflektor 12 ist so ausgebildet, dass er den reflektierten Lichtstrahl 3' seinerseits in Richtung einer dritten optischen Achse 13 reflektiert, die um ein festes Maß 14 in einer festen Querrichtung gegenüber der zweiten optischen Achse 11 parallelversetzt ist. In den beiden Fig. 1 und 2 sieht das feste Maß 14 nur deshalb unterschiedlich groß aus, weil es in der festen Querrichtung unter unterschiedlichen Winkeln zu den Blickrichtungen der Fig. 1 und 2 verläuft. Der von dem zweiten Reflektor 12 reflektierte Lichtstrahl ist in den Figuren mit dem Bezugszeichen 3" versehen. Auf der optischen Achse 13 gelangt der reflektierte Lichtstrahl 3" erneut zu dem Retroreflektor 7, von dem er in Richtung einer vierten optischen Achse 15 reflektiert wird. Die vierte optische Achse 15 ist gegenüber der ersten optischen Achse 4 um dasselbe feste Maß 14 parallelversetzt wie die dritte optische Achse 13 gegenüber der zweiten optischen Achse 11, aber entgegen der festen Querrichtung. Der erneut von dem Retroreflektor 7 längs der optischen Achse 15 reflektierte Lichtstrahl ist in den Figuren mit dem Bezugszeichen 3‴ versehen.

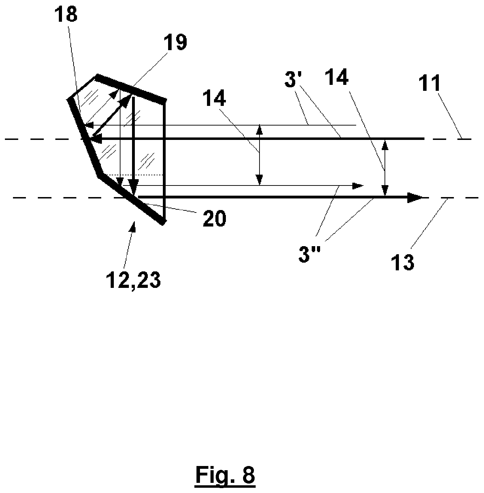

Die feste Lagebeziehung der vierten optischen Achse 15 zu der ersten optischen Achse 4 beruht allein auf einer festen Ausrichtung des zweiten Reflektors 12 gegenüber der mechanischen Struktur 5 der Lichtquelle 2. Eine feste Lage oder Orientierung des ersten Reflektors 6 gegenüber der Lichtquelle 2 ist hierfür keine Voraussetzung. Dies wird im Folgenden anhand der Fig. 8 bis 10 noch näher erläutert werden. Die feste Ausrichtung des zweiten Reflektors 12 gegenüber der mechanischen Struktur 5 der Lichtquelle 2 wird durch eine Befestigung 16 des zweiten Reflektors 12 an der mechanischen Struktur 5 erreicht, wobei die Befestigung nicht unveränderlich starr sein muss. Vielmehr können hier Einstelleinrichtungen vorhanden sein, um den zweiten Reflektor 12 wie gewünscht gegenüber der ersten optischen Achse 4 auszurichten. Zudem sind je nach Ausführungsform des zweiten Reflektors 12 auch bestimmte Lage- und Orientierungsveränderungen des zweiten Reflektors 12 gegenüber der mechanischen Struktur 5 unerheblich, welche den Querversatz zwischen den optischen Achsen 11 und 13 nicht nur in Bezug auf sein festes Maß 14 sondern auch auf seine Richtung quer zu der optischen Achse 11 unberührt lassen.

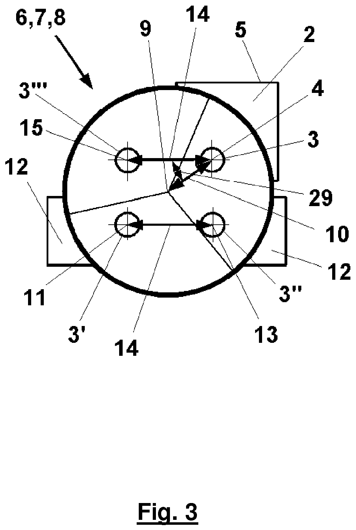

Um die notwendige Größe des Retroreflektors 7, damit der von dem zweiten Reflektor 12 reflektierte Lichtstrahl 3" wieder auf den Retroreflektor 7 trifft zu begrenzen, sind der durch den zweiten Reflektor eingeführte Parallelversatz zwischen der zweiten optischen Achse 11 und der dritten optischen Achse 13 um das feste Maß 14 und der durch den Retroreflektor 7 eingeführte Parallelversatz zwischen der ersten optischen Achse 4 und der zweiten optischen Achse 11 um das doppelte Maß 10 gefaltet, so dass sie sich nicht vollständig aber teilweise kompensieren. Ein Winkel 29 zwischen dem Querversatz des Retroreflektors 7 zu der ersten optischen Achse 4 um das Maß 10 und dem von dem zweiten Reflektor 12 resultierenden Parallelversatz der vierten optischen Achse 15 gegenüber der ersten optischen Achse 4 um das feste Maß 14 ist spitz und beträgt hier etwa 30°. Das feste Maß 14 des Parallelversatzes der vierten optischen Achse 15 gegenüber der ersten optischen Achse 4 beträgt dabei etwa das 2-fache des Maßes 10 des Querversatzes des Retroreflektors multipliziert mit dem Cosinus des Winkels 29. So liegt in Fig. 3 die erste optische Achse 4 in einem gewissen vertikalen Abstand über der dritten optischen Achse 13 und die vierte optische Achse 15 in demselben vertikalen Abstand über der zweiten optischen Achse 11.

Wie in den Fig. 1 und 2 angedeutet ist, kann auf der vierten optischen Achse 15 ein dritter Reflektor 27, beispielsweise in Form eines Konvexspiegels 28, angeordnet sein, der um einen Punkt auf der vierten optischen Achse 15 gekrümmt ist und der beispielsweise einen LASER-Resonator einseitig begrenzt, bei dem LASER-Material in der Lichtquelle 2 gepumpt wird. Dabei kann der dritte Reflektor 27 anders als in den Fig. 1 und 2 angedeutet ebenfalls an der mechanischen Struktur 5 der Lichtquelle 2 befestigt sein.

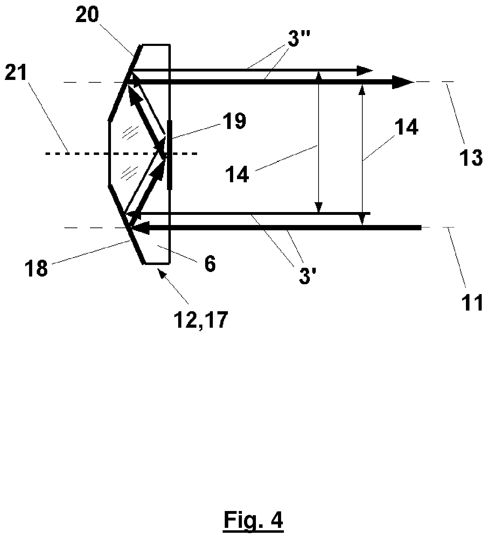

**Fig. 4** illustriert eine erste Ausführungsform des zweiten optischen Reflektors 12 in Form eines Prismas 17 mit drei den Lichtstrahl 3' reflektierenden planen Flächen 18, 19 und 20. Dabei ist die eine plane Fläche 19 orthogonal zu den optischen Achsen 11 und 13 ausgerichtet, und die beiden anderen planen Flächen 18 und 20 sind achsensymmetrisch zu einer Flächennormalen 21 der planen Fläche 19 angeordnet, wobei Flächennormalen aller drei planen Flächen 18 bis 20 in die Zeichenebene von **Fig. 4** fallen. Hierdurch ist der von dem zweiten Reflektor 12 in Richtung der dritten optischen Achse 13 reflektierte Lichtstrahl 3" gegenüber dem in Richtung der zweiten optischen Achse 11 einfallenden Lichtstrahl 3' immer in derselben Querrichtung um dasselbe feste Maß 14 parallelversetzt. Fig. 4 deutet mit schwächerer Linie eine Verlagerung des Lichtstrahls 3' nach oben an. Hierdurch ergibt sich eine gleich große Verlagerung des reflektierten Lichtstrahls 3" nach oben. Auch bei einer Verlagerung des Lichtstrahls 3' in der Blickrichtung der Fig. 4 verlagert sich der von dem zweiten Reflektor 12 reflektierte Lichtstrahl 3" in genau derselben Richtung.

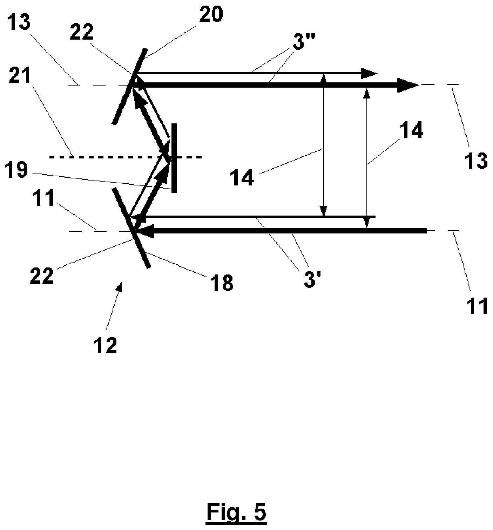

**Fig. 5** zeigt einen zu dem zweiten Reflektor 12 gemäß Fig. 4 äquivalenten zweiten Reflektor 12, bei dem die den Lichtstrahl 3' reflektierenden planen Flächen 18 bis 20 an drei Planspiegeln 22 ausgebildet sind.

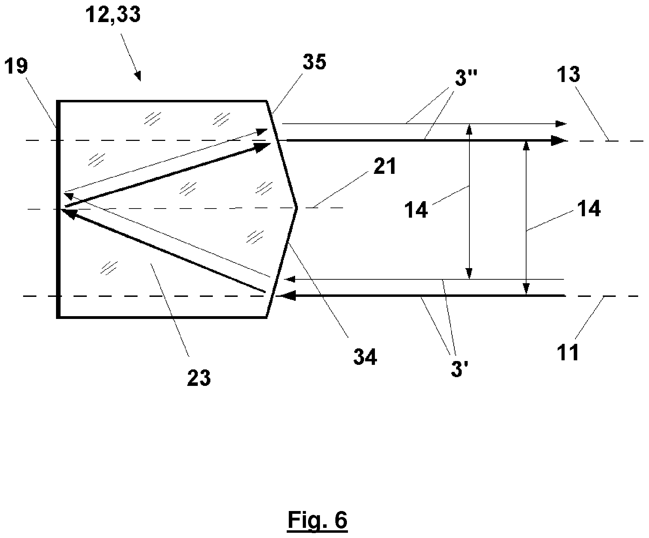

Bei der in **Fig. 6** gezeigten Ausführungsform des zweiten Reflektors handelt es sich um ein weiteres Prisma 33. Beim Eintritt in das Prisma 33 wird der Lichtstrahl 3' von einer brechenden planen Fläche 34 abgelenkt, bevor er von der orthogonal zu den optischen Achsen 11 und 13 ausgerichteten reflektierenden planen Fläche 19 reflektiert wird. Bei Wiederaustritt aus dem Prisma 33 wird der Lichtstrahl 3' durch eine weitere brechende plane Fläche 35 abgelenkt, so dass der von dem zweiten Reflektor 12 reflektierte Lichtstrahl 3" parallel zu dem einfallenden Lichtstrahl 3' verläuft. Dabei grenzen die beiden brechenden optischen Flächen 34 und 35 unmittelbar aneinander an. Auf diese Weise ist der Bereich normal zu der optischen Achse 11, in dem der Lichtstrahl 3' auf den zweiten Reflektor 12 auftreffen kann, besonders groß.

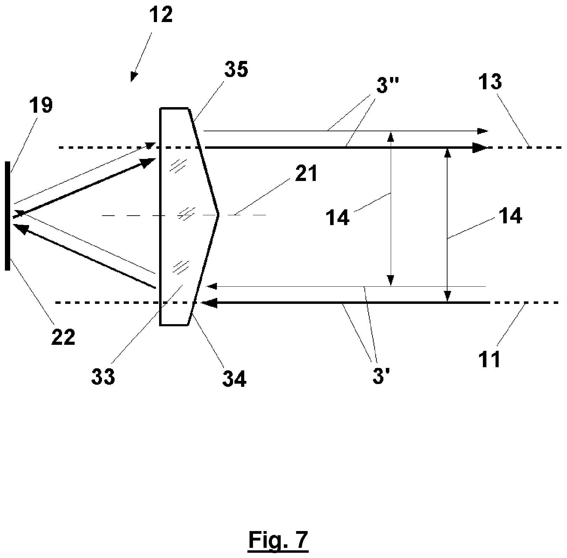

**Fig. 7** zeigt einen zu dem zweiten Reflektor 12 gemäß Fig. 6 äquivalenten zweiten Reflektor 12, bei dem die den Lichtstrahl 3' reflektierende plane Fläche 19 an einem Planspiegel 22 ausgebildet ist, der in Richtung der optischen Achsen 11 und 13 von dem Prisma 33 beabstandet ist.

Bei der in **Fig. 8** gezeigten Ausführungsform des zweiten Reflektors 12 handelt es sich um ein weiteres Prisma 23. Wie an dem Prisma 17 gemäß Fig. 4 sind an dem Prisma 23 drei plane Flächen 18 bis 20 ausgebildet, die den Lichtstrahl 3' nacheinander reflektieren. Die plane Fläche 20 ist dabei unter einem Winkel von 45° zu den optischen Achsen 11 und 13 ausgerichtet und lenkt den Lichtstrahl 3' um 90° um. Auch die beiden anderen planen Flächen 18 und 19 zusammen lenken den Lichtstrahl 3' um 90° um. Insgesamt wird auch hier unabhängig von der genauen Lage der zweiten optischen Achse 11, auf der der Lichtstrahl 3' einfällt, der reflektierte Lichtstrahl 3" immer in derselben Querrichtung um dasselbe feste Maß 14 gegenüber dem einfallenden Lichtstrahl 3' parallelversetzt.

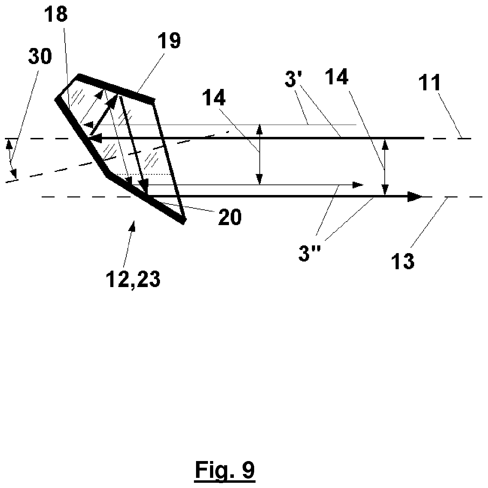

**Fig. 9** illustriert, dass ein Verschwenken des Prismas 23 gemäß Fig. 8 das feste Maß 14 des Parallelversatzes zwischen dem einfallenden Lichtstrahl 3' und dem von dem zweiten Reflektor 12 reflektierten Lichtstrahl 3" nicht ändert. Das feste Maß 14 bleibt auch bei Verschiebungen des Prismas 23 parallel und senkrecht zur Zeichenebene von Fig. 9 fest. Drehungen des Prismas 13 um die optischen Achsen 11 und 13 ändern jedoch die Richtung des Parallelversatzes um das feste Maß 14 und sind daher nicht zulässig. Das heißt, der zweite Reflektor 12 muss nach vorgenommener Einstellung zumindest in Bezug auf Drehungen um die optischen Achsen 11 und 13 und die dazu parallele erste optische Achse 4 unbeweglich an der mechanischen Struktur 5 der Lichtquelle 2 gemäß den Fig. 1 bis 3 befestigt sein.

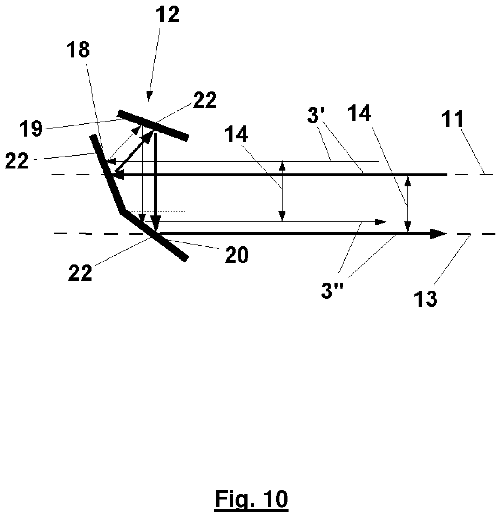

**Fig. 10** zeigt eine Ausführungsform des zweiten Reflektors 12, die zu derjenigen gemäß Fig. 8 und 9 äquivalent ist, aber aus Planspiegeln 22 aufgebaut ist.

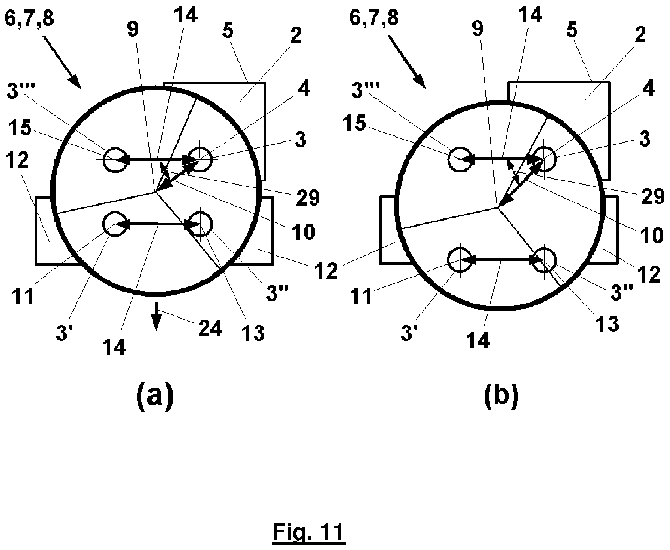

**Fig. 11 (a)** zeigt die optische Anordnung 1 gemäß den Fig. 1 bis 3 in derselben Blickrichtung wie Fig. 3. Dabei deutet ein Pfeil 24 in Fig. 8 (a) eine Verschiebung des Retroreflektors 7 nach unten an, die in **Fig. 11 (b)** realisiert ist. Hierdurch verlagert sich zwar die zweite optische Achse 11 und damit auch die dritte optische Achse 13 weiter nach unten. Da aber die vierte optische Achse 15 gegenüber der zweiten optischen Achse 11 und der dritten optischen Achse 13 entsprechend weiter nach oben verschoben wird, liegt die vierte optische Achse 15 wieder auf derselben Höhe wie die erste optische Achse 4, und sie ist um dasselbe feste Maß 14 entgegen der horizontalen Querrichtung gegenüber der ersten optischen Achse 4 parallelversetzt, in der die dritte optische Achse 13 gegenüber der zweiten optischen Achse 11 um das feste Maß 14 parallelversetzt ist.

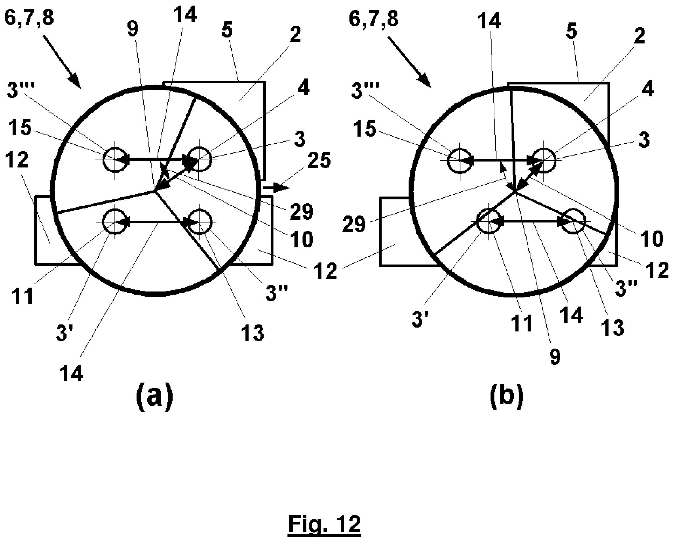

**Fig. 12** zeigt entsprechend die Auswirkungen einer horizontalen Verschiebung des Retroreflektors 7 nach rechts in Richtung eines in Fig. 9 (a) eingezeichneten Pfeils 25. Hierdurch verlagert sich auch die zweite optische Achse 11 nach rechts. Dies wird jedoch von dem Retroreflektor 7 zwischen der dritten optischen Achse 13 und der vierten optischen Achse 15 ausgeglichen, so dass auch hier die vierte optische Achse 15 gegenüber der ersten optischen Achse 4 um dasselbe feste Maß 14 entgegen der horizontalen Querrichtung parallelversetzt ist, in der die dritte optische Achse 13 gegenüber der zweiten optischen Achse 11 um das feste Maß 14 parallelversetzt ist.

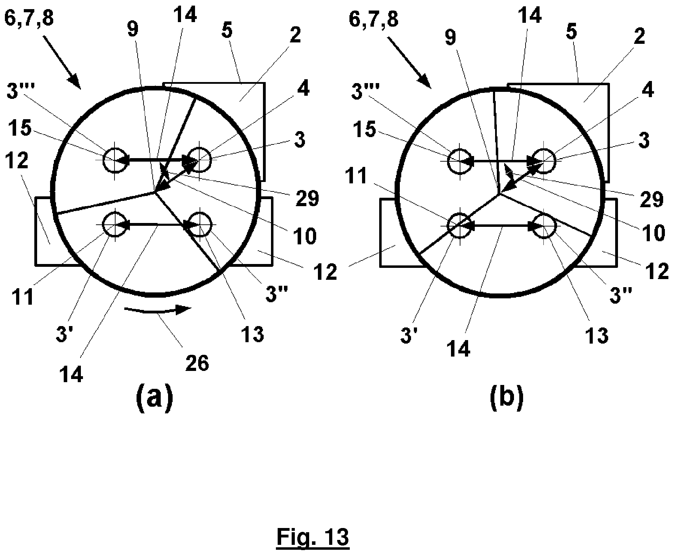

**Fig. 13** illustriert den Effekt einer Drehung des Retroreflektors 7 um seine Hauptachse 9 in Richtung eines in Fig. 10 (a) eingezeichneten Drehpfeils 26. Diese Drehung wirkt sich auf die Lage der zweiten optischen Achse 11 gegenüber der ersten optischen Achse 4 nicht aus.

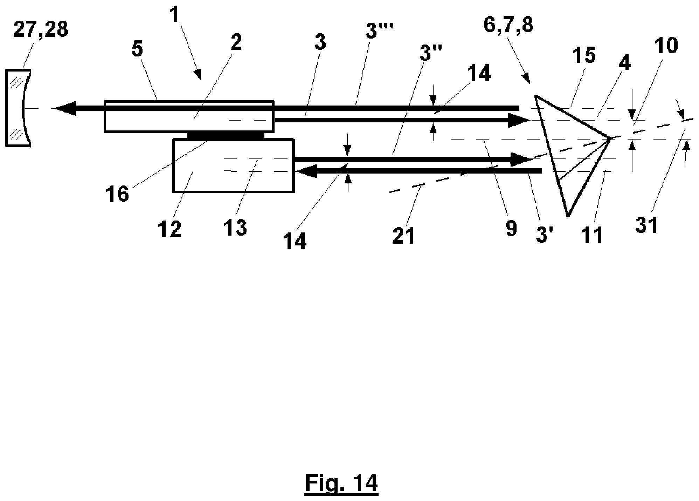

**Fig. 14** illustriert den Effekt einer Verkippung der Hauptachse 9 gegenüber der ersten optischen Achse 4 um einen Winkel 31. Dieser Winkel 31 wirkt sich in Form einer Änderung des Parallelversatzes zwischen den beiden optischen Achsen 4 und 11 aus, der aber entsprechend durch den Parallelversatz zwischen den optischen Achsen 13 und 15 ausgeglichen wird.

Zusammenfassend zeigen die Fig. 11 bis 14, dass die Lage und Orientierung des als Trippelprisma 8 ausgebildeten Retroreflektors 7 für die Lage der vierten optischen Achse 15 gegenüber der ersten optischen Achse 4 unerheblich ist. Durch Linearkombination der in den Fig. 11 bis 14 einzeln dargestellten Lage- und Orientierungsänderungen lassen sich alle beliebigen Lage- und Orientierungsänderungen des Retroreflektors darstellen.

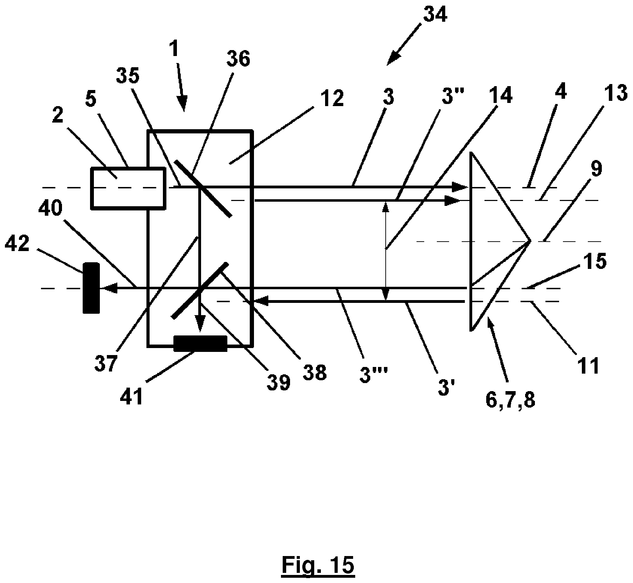

**Fig. 15** zeigt ein erfindungsgemäßes LASER-Interferometer 34 mit der erfindungsgemäßen optischen Anordnung 1. Dabei wird ein von der Lichtquelle 2 kommender LASER-Strahl 35 mit einem Strahlteiler 36 in den Lichtstrahl 3 und einen dazu kohärenten Lichtstrahl 37 aufgespalten. Mit Hilfe eines weiteren Strahlteilers 38 werden der längs der vierten optischen Achse 15 von dem ersten Reflektor 6 reflektierte Lichtstrahl 3‴ und der dazu kohärente Lichtstrahl 37 überlagert, wobei zwei komplementäre Interferenzsignale 39 und 40 entstehen, die von zwei Detektoren 41 und 42 erfasst werden. Die Strahlteiler 38 sind starr mit der mechanischen Struktur 5 der Lichtquelle 2 verbunden. Die Detektoren 41 und 42 können, aber müssen nicht mit der mechanischen Struktur 5 verbunden sein. Mit Änderung des Abstands des ersten Reflektors 6 zu der Lichtquelle 2 ändern sich die beiden komplementären Interferenzsignale 39 und 40 und erlauben so, Änderungen dieses Abstands exakt zu erfassen. Andere Änderungen der Orientierung der Lage des ersten Reflektors 6 sind hingegen durch die optische Anordnung 1 kompensiert.

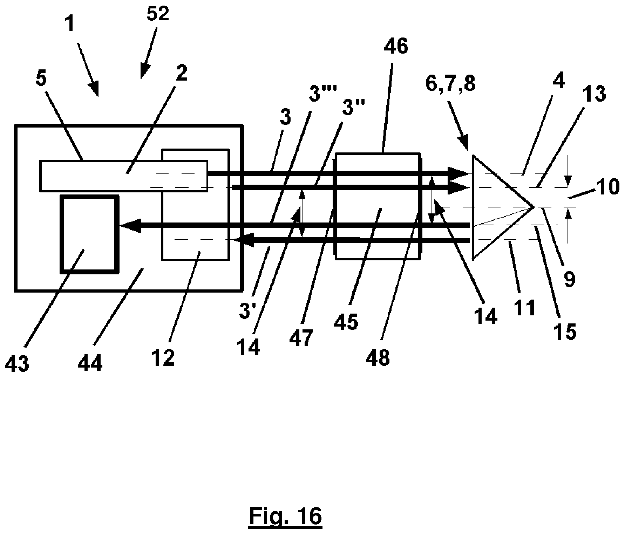

**Fig. 16** zeigt ein erfindungsgemäßes LASER-Spektrometer 52, bei dem die Lichtquelle 2, der zweite Reflektor 12 und ein Detektor 43 in einem gemeinsamen Gehäuse 44 auf einer Seite eines Messvolumens 45 angeordnet sind, während der erste Reflektor 6 auf der gegenüberliegenden Seite des Messvolumens 45 liegt. Das Messvolumen ist hier durch eine Wand 46 begrenzt. Der Lichtstrahl 3 tritt durch Fenster 47 und 48 viermal in das Messvolumen 45 ein und aus diesem wieder heraus und gelangt anschließend unabhängig von der aktuellen Lage und Orientierung des ersten Reflektors 6 (Retroreflektor 7) sicher zu dem Detektor 43, der relativ zu der mechanischen Struktur 5 der Lichtquelle 2 festliegt.

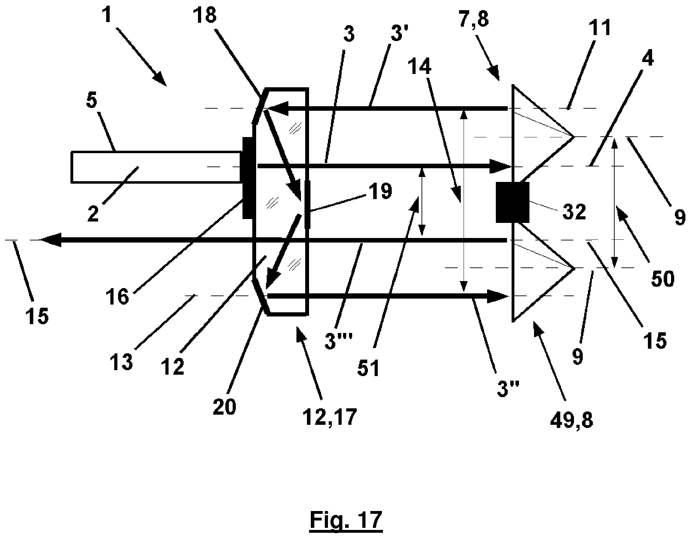

**Fig. 17** zeigt eine alternative Ausführungsform der optischen Anordnung 1, bei der der von dem zweiten Reflektor 12 in Form eines Prismas 17 wie in Fig. 4 reflektierte Lichtstrahl 3" nicht erneut von dem ersten Reflektor 6, sondern einem damit starr gekoppelten Retroreflektor 49 reflektiert wird. Zur Verdeutlichung der starren Kopplung der beiden Retroreflektoren 7 und 49 ist in Fig. 17 eine Befestigung 32 eingezeichnet. Der Retroreflektor 49 ist ebenfalls als Trippelprisma ausgebildet, und zwar hier konkret genauso wie der erste Reflektor 6. Die beiden Retroreflektoren 7 und 49 sind in einem festen Abstand 50 quer zu der dritten optischen Achse 13 angeordnet. Da die Hauptachsen 9 der beiden Trippelprismen 8 hier parallel zueinander verlaufen, liegt der feste Abstand 50 hier auch zwischen den Hauptachsen der beiden Retroreflektoren 7 und 49 vor. Der feste Abstand 50 weist einen festen Winkel zu dem Querversatz mit dem festen Maß 14 zwischen der zweiten optischen Achse 11 und der dritten optischen Achse 13 auf, oder er verläuft parallel dazu. Dies bedeutet, dass die Einheit mit den beiden Retroreflektoren 7 und 49 nicht um eine der optischen Achsen 4, 11, 13 und 15 verdreht werden darf, weil sich dann der Winkel zwischen dem Abstand 15 und dem Querversatz mit dem festen Maß 14 ändern würde. Bei dieser Ausführungsform der optischen Anordnung 1 weist der Querversatz zwischen der ersten optischen Achse 4 und der vierten optischen Achse 15 zwar ein weiteres festes Maß 51 auf. Dieses weitere feste Maß 51 ist jedoch nur dann gleich dem festen Maß 14, wenn der Abstand 50 mal dem Kosinus eines etwaigen Winkels zwischen dem festen Abstand 50 und dem Querversatz mit dem festen Maß 14 gleich dem festen Maß 14 ist. Zudem verläuft der Querversatz mit dem weiteren festen Maß 51 nur dann genau in Richtung des Querversatzes mit dem festen Maß 14, wenn der feste Abstand 15 und der Querversatz mit dem festen Maß 14 parallel zueinander verlaufen. Anders als bei der Ausführungsform gemäß den voranstehenden Figuren weist der Querversatz zwischen der ersten optischen Achse 4 und der vierten optischen Achse 15 bei dieser alternativen Ausführungsform der optischen Anordnung 1 zudem dieselbe Richtung wie der Querversatz zwischen der zweiten optischen Achse 11 und der dritten optischen Achse 13 auf. Weitere Besonderheit ist, dass der von der Lichtquelle 2 kommende Lichtstrahl 3 hier ebenfalls durch das Prisma 17 hindurchtritt.

### BEZUGSZEICHENLISTE

- 1: optische Anordnung
- 2: Lichtquelle
- 3: Lichtstrahl
- 3': reflektierter Lichtstrahl
- 3": reflektierter Lichtstrahl
- 3‴: reflektierter Lichtstrahl
- 4: erste optische Achse
- 5: mechanische Struktur der Lichtquelle
- 6: erster Reflektor
- 7: Retroreflektor
- 8: Trippelprisma
- 9: Hauptachse
- 10: Maß
- 11: zweite optische Achse
- 12: zweiter Reflektor
- 13: dritte optische Achse
- 14: festes Maß
- 15: vierte optische Achse
- 16: Befestigung
- 17: Prisma
- 18: plane Fläche
- 19: plane Fläche
- 20: plane Fläche
- 21: Flächennormale
- 22: Planspiegel
- 23: Prisma
- 24: Pfeil
- 25: Pfeil
- 26: Drehpfeil
- 27: dritter Reflektor
- 28: Konvexspiegel
- 29: Winkel
- 30: Winkel
- 31: Winkel
- 32: Befestigung
- 33: Prisma
- 34: LASER-Interferometer
- 35: LASER-Strahl
- 36: Strahlteiler
- 37: kohärenter Lichtstrahl
- 38: Strahlteiler
- 39: Interferenzsignal
- 40: Interferenzsignal
- 41: Detektor
- 42: Detektor
- 43: Detektor
- 44: Gehäuse
- 45: Messvolumen
- 46: Wand
- 47: Fenster
- 48: Fenster
- 49: gekoppelte Retroreflektor
- 50: Abstand
- 51: weiteres festes Maß
- 52: LASER-Spektrometer

## Patentansprüche

1. Optische Anordnung (1) mit
- einer Lichtquelle (2), die einen Lichtstrahl (3) in Richtung einer ersten optischen Achse (4) emittiert, wobei eine Lage der ersten optischen Achse (4) gegenüber einer mechanischen Struktur (5) der Lichtquelle (2) definiert ist,
- einem entfernt von der Lichtquelle (2) angeordneten ersten Reflektor (6) für den Lichtstrahl (3) und
- einem zweiten Reflektor (12) für den von dem ersten Reflektor (6) reflektierten Lichtstrahl (3),
wobei der erste Reflektor (6) ein Retroreflektor (7) ist, der bezogen auf seine Hauptachse (9) mit einem Querversatz zu der ersten optischen Achse (4) angeordnet ist, so dass er den Lichtstrahl (3) in Richtung einer zweiten optischen Achse (11) reflektiert, die zu der ersten optischen Achse (4) in Querrichtung des Querversatzes parallelversetzt ist, wobei der an der mechanischen Struktur (5) der Lichtquelle (2) befestigte zweite Reflektor (12) den von dem ersten Reflektor (6) reflektierten Lichtstrahl (3) in Richtung einer dritten optischen Achse (13), die gegenüber der zweiten optischen Achse (11) um ein festes Maß (14) in einer festen Querrichtung parallelversetzt ist,
- entweder zu dem ersten Reflektor (6) zurück reflektiert, so dass der Lichtstrahl (3‴) von dem ersten Reflektor (6) in Richtung einer vierten optischen Achse (15) reflektiert wird, die um das feste Maß (14) entgegen der festen Querrichtung gegenüber der ersten optischen Achse (4) parallelversetzt ist,
- oder zu einem weiteren Retroreflektor (49) reflektiert, der mit dem ersten Reflektor (6) starr gekoppelt und derart ausgerichtet ist, dass der Lichtstrahl (3‴) von dem weiteren Retroreflektor (49) in Richtung einer vierten optischen Achse (15) reflektiert wird, die um ein weiteres festes Maß (51) in der festen Querrichtung gegenüber der ersten optischen Achse (4) parallelversetzt ist;
**dadurch gekennzeichnet, dass**
- das feste Maß (14) und die feste Querrichtung durch den zweiten Reflektor (12) und dessen Befestigung an der mechanischen Struktur (5) der Lichtquelle (2) vorgegeben sind, und
- ein Winkel (29) zwischen dem Querversatz des Retroreflektors (7) zu der ersten optischen Achse (4) und dem Parallelversatz der vierten optischen Achse (15) gegenüber der ersten optischen Achse (2) entgegen der festen Querrichtung zwischen 10° und 70° oder zwischen 20° und 50° beträgt.

2. Optische Anordnung (1) nach Anspruch 1, **dadurch gekennzeichnet, dass** das feste Maß (14) das 1- bis 3-fache oder das 1,5- bis 2,5-fache des Querversatzes des Retroreflektors multipliziert mit dem Cosinus des Winkels beträgt.

3. Optische Anordnung (1) nach einem der vorhergehenden Ansprüche, **dadurch gekennzeichnet, dass** der zweite Reflektor (12) eine Spiegelanordnung oder eine Prisma (17, 23) mit drei den Lichtstrahl (3) reflektierenden planen Flächen (18 bis 20) ist.

4. Optische Anordnung (1) nach Anspruch 3, **dadurch gekennzeichnet, dass** eine der planen Flächen (19) orthogonal zu der ersten optischen Achse (4) ausgerichtet ist und dass die beiden anderen planen Flächen (18, 20) achsensymmetrisch zu einer Flächennormalen (21) der einen planen Fläche (19) angeordnet sind, wobei Flächennormalen aller drei planen Flächen (18 bis 20) in eine Ebene fallen.

5. Optische Anordnung (1) nach Anspruch 3, **dadurch gekennzeichnet, dass** eine der planen Flächen (20) unter einem Winkel von 45° zu der ersten optischen Achse (4) ausgerichtet ist.

6. Optische Anordnung (1) nach einem der vorhergehenden Ansprüche, **dadurch gekennzeichnet, dass** ein dritter Reflektor (27) für den von dem ersten Reflektor (6) erneut in Richtung der vierten optischen Achse (15) reflektierten Lichtstrahl (3) an der mechanischen Struktur (5) der Lichtquelle (2) befestigt ist.

7. Optische Anordnung (1) nach Anspruch 6, **dadurch gekennzeichnet, dass** der dritte Reflektor (27) in Richtung der vierten optischen Achse (15) zurück zu dem ersten Reflektor (6) reflektiert.

8. Optische Anordnung (1) nach Anspruch 7, **dadurch gekennzeichnet, dass** der dritte Reflektor (27) ein orthogonal zu der ersten optischen Achse (4) ausgerichteter Planspiegel (22) ist.

9. Optische Anordnung (1) nach Anspruch 7, **dadurch gekennzeichnet, dass** der dritte Reflektor (27) ein um einem Mittelpunkt auf der vierten optischen Achse (15) gekrümmter Konvexspiegel (28) ist.

10. Optische Anordnung (1) nach einem der vorhergehenden Ansprüche, **dadurch gekennzeichnet, dass** der erste Reflektor (6) und soweit vorhanden auch der weitere Retroreflektor (49) ein Trippelprisma (8) oder einen Trippelspiegel aufweist.

11. Optische Anordnung (1) nach einem der vorhergehenden Ansprüche, **dadurch gekennzeichnet, dass** die Lichtquelle (2) ein LASER-Material aufweist und der Lichtstrahl (3) ein LASER-Strahl ist.

12. LASER mit
- einem LASER-Resonator und
- einer optischen Anordnung (1) nach Anspruch 11,
**dadurch gekennzeichnet,**
- **dass** der erste Reflektor (6) und der zweite Reflektor (12) Teile des LASER-Resonators sind und
- **dass** das LASER-Material der Lichtquelle (2) in dem LASER-Resonator angeordnet ist.

13. LASER-Interferometer (34) mit einer optischen Anordnung (1) nach Anspruch 11,
**dadurch gekennzeichnet, dass** der von dem ersten Reflektor (6) und dem zweiten Reflektor (12) reflektierte Lichtstrahl mit einem dazu kohärenten Lichtstrahl überlagert wird, in dessen optischen Pfad ausschließlich optische Elemente angeordnet sind, die an der mechanischen Struktur (5) der Lichtquelle (2) befestigt sind.

14. LASER-Spektrometer (52) mit einer optischen Anordnung (1) nach Anspruch 11, **dadurch gekennzeichnet, dass** die Lichtquelle (2), der zweite Reflektor (12) und ein an der mechanischen Struktur (5) der Lichtquelle (2) befestigter Detektor (43) auf einer ersten Seite und der erste Reflektor (6) auf einer der ersten Seite gegenüberliegenden zweiten Seite eines Messvolumens (45) angeordnet sind, so dass der von dem ersten Reflektor (6) und dem zweiten Reflektor (12) reflektierte Lichtstrahl mindestens viermal durch das Messvolumen (45) hindurchtritt, bevor er auf den Detektor (43) trifft.

## Claims

1. An optical arrangement (1) with
- a light source (2) which emits a light beam (3) in the direction of a first optical axis (4), wherein a position of the first optical axis (4) is defined in relation to a mechanical structure (5) of the light source (2),
- a first reflector (6) for the light beam (3) arranged away from the light source (2) and
- a second reflector (12) for the light beam (3) reflected by the first reflector (6),
wherein the first reflector (6) is a retroreflector (7) which is arranged at a transverse offset to the first optical axis (4) with respect to its main axis (9), so that it reflects the light beam (3) in the direction of a second optical axis (11), which is offset parallel to the first optical axis (4) in the transverse direction of the transverse offset, wherein the second reflector (12) attached to the mechanical structure (5) of the light source (2) redirects the light beam (3) reflected by the first reflector (6) in the direction of a third optical axis (13), which is offset parallel in relation to the second optical axis (11) by a fixed amount (14) in a fixed transverse direction,
- either by reflecting back to the first reflector (6), so that the beam of light (3"') is reflected from the first reflector (6) in the direction of a fourth optical axis (15), which is offset parallel in relation to the first optical axis (4) by the fixed amount (14) against the fixed transverse direction;
- or by reflecting it to a further retro-reflector (49) which is rigidly coupled to the first reflector (6) and aligned in such a way that the beam of light (3"') is reflected by the additional retroreflector (49) in the direction of a fourth optical axis (15), which is offset by a further fixed amount (51) in the fixed transverse direction in relation to the first optical axis (4);
**characterized in that**
- the fixed amount (14) and the fixed transverse direction are predetermined by the second reflector (12) and its attachment to the mechanical structure (5) of the light source (2), and
- an angle (29) between the transverse offset of the retroreflector (7) to the first optical axis (4) and the parallel offset of the fourth optical axis (15) in relation to the first optical axis (2) against the fixed transverse direction is between 10° and 70° or is between 20° and 50° .

2. The optical arrangement (1) according to claim 1, **characterized in that** the fixed amount (14) is 1 to 3 times or 1.5 to 2.5 times the transverse offset of the retroreflector multiplied by the cosine of the angle.

3. The optical arrangement (1) according to any one of the preceding claims, **characterized in that** the second reflector (12) is a mirror arrangement or a prism (17, 23) with three flat surfaces (18 to 20) reflecting the light beam (3).

4. The optical arrangement (1) according to claim 3, **characterized in that** one of the flat surfaces (19) is aligned orthogonally to the first optical axis (4) and **in that** the other two flat surfaces (18, 20) are arranged axially symmetrically to a surface normal (21) of the one flat surface (19), wherein surface normals of all three flat surfaces (18 to 20) lie in one plane.

5. The optical arrangement (1) according to claim 3, **characterized in that** one of the flat surfaces (20) is aligned at an angle of 45° to the first optical axis (4).

6. The optical arrangement (1) according to any one of the preceding claims, **characterized in that** a third reflector (27) for the light beam (3) reflected again by the first reflector (6) in the direction of the fourth optical axis (15) is attached to the mechanical structure (5) of the light source (2).

7. The optical arrangement (1) according to claim 6, **characterized in that** the third reflector (27) reflects back to the first reflector (6) in the direction of the fourth optical axis (15).

8. The optical arrangement (1) according to claim 7, **characterized in that** the third reflector (27) is a plane mirror (22) aligned orthogonally to the first optical axis (4).

9. The optical arrangement (1) according to claim 7, **characterized in that** the third reflector (27) is a convex mirror (28) curved about a center on the fourth optical axis (15).

10. The optical arrangement (1) according to any one of the preceding claims, **characterized in that** the first reflector (6) and, if present, also the further retroreflector (49) have a triple prism (8) or a triple mirror.

11. The optical arrangement (1) according to any one of the preceding claims, **characterized in that** the light source (2) has a LASER material and the light beam (3) is a LASER beam.

12. A LASER with
- a LASER resonator and
- an optical arrangement (1) according to claim 11,
**characterized in that**
- the first reflector (6) and the second reflector (12) are parts of the LASER resonator and
- the LASER material of the light source (2) is arranged in the LASER resonator.

13. A LASER interferometer (34) with an optical arrangement (1) according to claim 11, **characterized in that** the light beam reflected by the first reflector (6) and the second reflector (12) is superimposed with a light beam coherent thereto, in the optical path of which only optical elements are arranged which are attached to the mechanical structure (5) of the light source (2).

14. A LASER spectrometer (52) with an optical arrangement (1) according to claim 11, **characterized in that** the light source (2), the second reflector (12), and a detector (43) attached to the mechanical structure (5) of the light source (2) are arranged on a first side and the first reflector (6) is arranged on a second side of a measuring volume (45) opposite the first side, so that the light beam reflected by the first reflector (6) and the second reflector (12) passes through the measuring volume (45) at least four times before hitting the detector (43).

## Revendications

1. Système optique (1) comprenant
- une source de lumière (2) qui émet un faisceau lumineux (3) en direction d'un premier axe optique (4), dans lequel une position du premier axe optique (4) est définie par rapport à une structure mécanique (5) de la source de lumière (2),
- un premier réflecteur (6), disposé à distance de la source de lumière (2), pour le faisceau lumineux (3), et
- un deuxième réflecteur (12) pour le faisceau lumineux (3) réfléchi par le premier réflecteur (6),
dans lequel le premier réflecteur (6) est un dispositif rétroréfléchissant (7) qui est disposé suivant un décalage transversal par rapport au premier axe optique (4), par rapport à son axe principal (9), de sorte qu'il réfléchit le faisceau lumineux (3) dans la direction d'un deuxième axe optique (11), qui est décalé parallèlement, par rapport au premier axe optique (4), dans le sens transversal du décalage transversal, dans lequel le deuxième réflecteur (12) fixé à la structure mécanique (5) de la source de lumière (2) renvoie par réflexion, dans la direction d'un troisième axe optique (13), qui est décalé parallèlement, par rapport au deuxième axe optique (11), d'une quantité fixe (14) dans un sens transversal fixe, le faisceau lumineux (3) réfléchi par le premier réflecteur (6)
- soit vers le premier réflecteur (6), de sorte que le faisceau lumineux (3"') est réfléchi par le premier réflecteur (6) dans la direction d'un quatrième axe optique (15), qui est décalé parallèlement, par rapport au premier axe optique (4), de la quantité fixe (14) en sens inverse au sens transversal fixe,
- soit vers un autre dispositif rétroréfléchissant (49), qui est couplé rigidement au premier réflecteur (6) et aligné de sorte que le faisceau lumineux (3"') est réfléchi par l'autre dispositif rétroréfléchissant (49) dans la direction d'un quatrième axe optique (15) qui est décalé parallèlement, par rapport au premier axe optique (4), d'une autre quantité fixe (51) dans le sens transversal fixe ;
**caractérisé en ce que**
- la quantité fixe (14) et le sens transversal fixe sont prédéterminés par le deuxième réflecteur (12) et sa fixation à la structure mécanique (5) de la source de lumière (2), et
- un angle (29) entre le décalage transversal du dispositif rétroréfléchissant (7) par rapport au premier axe optique (4) et le décalage parallèle du quatrième axe optique (15) par rapport au premier axe optique (2) en sens inverse au sens transversal fixe est compris entre 10° et 70° ou entre 20° et 50° .

2. Système optique (1) selon la revendication 1, **caractérisé en ce que** la quantité fixe (14) est de 1 à 3 fois ou de 1,5 à 2,5 fois le décalage transversal du dispositif rétroréfléchissant multiplié par le cosinus de l'angle.

3. Système optique (1) selon l'une des revendications précédentes, **caractérisé en ce que** le deuxième réflecteur (12) est un dispositif à miroir ou un prisme (17, 23) doté de trois surfaces planes (18 à 20) réfléchissant le faisceau lumineux (3).

4. Système optique (1) selon la revendication 3, **caractérisé en ce que** l'une des surfaces planes (19) est alignée orthogonalement au premier axe optique (4) et que les deux autres surfaces planes (18, 20) sont axialement symétriques à une surface normale (21) de l'une surface plane (19), dans lequel les surfaces normales des trois surfaces planes (18 à 20) tombent dans un seul plan.

5. Système optique (1) selon la revendication 3, **caractérisé en ce que** l'une des surfaces planes (20) est alignée selon un angle de 45° par rapport au premier axe optique (4).

6. Système optique (1) selon l'une des revendications précédentes, **caractérisé en ce qu'**un troisième réflecteur (27) pour le faisceau lumineux (3) réfléchi par le premier réflecteur (6) à nouveau en direction du quatrième axe optique (15) est fixé sur la structure mécanique (5) de la source de lumière (2).

7. Système optique (1) selon la revendication 6, **caractérisé en ce que** le troisième réflecteur (27) renvoie en réflexion vers le premier réflecteur (6) en direction du quatrième axe optique (15).

8. Système optique (1) selon la revendication 7, **caractérisé en ce que** le troisième réflecteur (27) est un miroir plan (22) aligné orthogonalement par rapport au premier axe optique (4).

9. Système optique (1) selon la revendication 7, **caractérisé en ce que** le troisième réflecteur (27) est un miroir convexe (28) courbé autour d'un centre sur le quatrième axe optique (15).

10. Système optique (1) selon l'une des revendications précédentes, **caractérisé en ce que** le premier réflecteur (6) et, le cas échéant, également l'autre dispositif rétroréfléchissant (49) présentent un triple prisme (8) ou un triple miroir.

11. Système optique (1) selon l'une des revendications précédentes, **caractérisé en ce que** la source de lumière (2) présente un matériau LASER et le faisceau lumineux (3) est un faisceau LASER.

12. LASER comprenant
- un résonateur LASER et
- un système optique (1) selon la revendication 11,
**caractérisé en ce que**
- le premier réflecteur (6) et le deuxième réflecteur (12) font partie du résonateur LASER et
- le matériau LASER de la source de lumière (2) est disposé dans le résonateur LASER.

13. Interféromètre LASER (34) comprenant un système optique (1) selon la revendication 11, **caractérisé en ce que** le faisceau lumineux réfléchi par le premier réflecteur (6) et le deuxième réflecteur (12) se superpose à un faisceau lumineux cohérent avec celui-ci, dans le trajet optique duquel seuls sont disposés des éléments optiques qui sont fixés à la structure mécanique (5) de la source de lumière (2).

14. Spectromètre LASER (52) comprenant un système optique (1) selon la revendication 11, **caractérisé en ce que** la source de lumière (2), le deuxième réflecteur (12) et un détecteur (43) fixé à la structure mécanique (5) de la source de lumière (2) sont disposés sur un premier côté et le premier réflecteur (6) est disposé sur un second côté d'un volume de mesure (45) opposé au premier côté, de sorte que le faisceau lumineux réfléchi par le premier réflecteur (6) et le deuxième réflecteur (12) traverse le volume de mesure (45) au moins quatre fois avant d'atteindre le détecteur (43).
